# EUROPEAN PATENT APPLICATION

(11) **EP 0 652 684 A2**
(43) Date of publication of application: **10.05.1995**
(21) Application number: 94203050.3
(22) Date of filing: 20.10.1994
(51) Int. Cl.: H04Q 11/04, H04L 12/56

(54) **Device for the implementation of ATM protocol layer functions in a B-ISDN network**

(30) Priority: 22.10.1993 IT MI932241
(71) Applicant: ITALTEL SOCIETA ITALIANA TELECOMUNICAZIONI s.p.a., I-20149 Milano (IT)
(72) Inventor: Merli, Edoardo, I-43100 Parma (IT); Pavesi, Marco, I-27029 Vigevano (PV) (IT); Boiocchi, Gianluca, I-24046 Osio di Sotto (BG) (IT); Prinetti, Giovanni, I-20100 Milano (IT)
(74) Representative: Giustini, Delio

(57) **Abstract**

Device (ATM_LM) for the conversion into ATM cells of information segments (SAR_PDU) coming from an higher adaptation layer (AAL) and accompanied by connection and application identification parameters (ID_AAL.ID_SSCS), as well as for the reverse conversion, from ATM cells coming from an ATM layer and including channel (VCI) and path (VPI) identifications, into information segments including connection and application identification parameters (ID_AAL.ID_SSCS). It includes a traffic forming or shaping unit (ATMU) controlling the sequence of ATM cells transmission to the ATM layer according to parameters contained in a memory unit (SHAPER_RAM). These parameters relate to traffic profiles of each connection of the higher adaptation layer (AAL) and are updated by a microprocessor (CONTROL_µP) as number and characteristics of these connections vary.

## Description

### Technical Field

This invention relates to broadband networks or B-ISDN (Broadband Integrated Service Digital Network) of the ATM type (Asynchronous Transfer Mode) and founds its application both in access parts to the network (terminals, concentrators, adapters, Inter working Units) and in switching nodes (server, signalling processors).

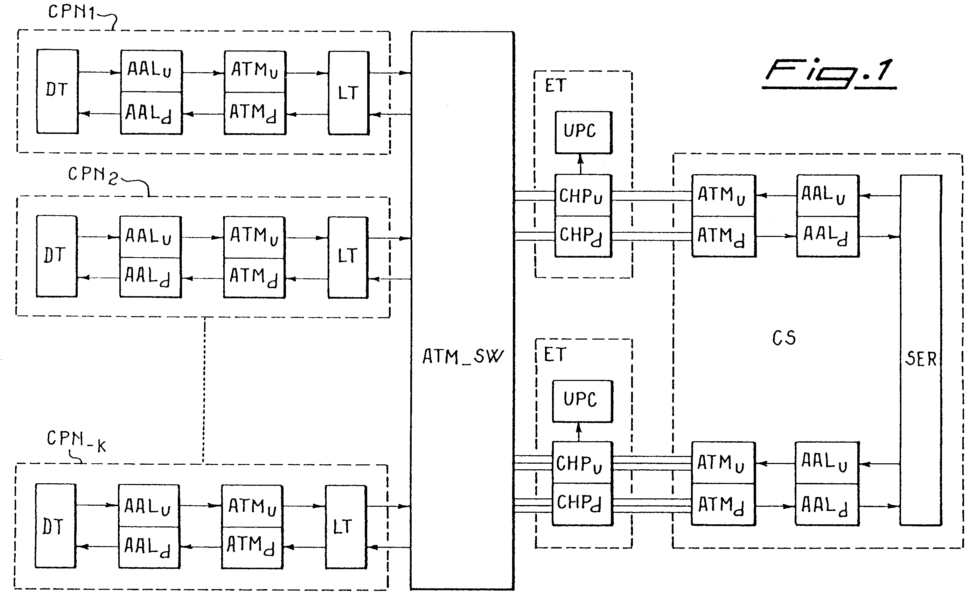

The invention is applied to data transfer through said broadband networks. Figure 1 shows for example sake only, an ATM node, including in short, a switching network ATM_SW to which several access posts CPN₁, ..., CPNₖ (Customer Premises Network) and a connectionless server CS are connected.

Data generated by applications (e.g. word processor or electronic sheets) of an user connected to the B-ISDN network are structured in packets varying in length from some bytes to tenths of thousands of bytes. To be able to transmit these packets on ATM networks, it is necessary to adapt the packet format to the ATM cell format, consisting of 48 information bytes or payload and 5 header bytes totalling 53 bytes.

Packets shall therefore be segmented to be included payloads of ATM cells. To make typical checks of transmission networks (error, sequence, etc.) some of the 48 available bytes are occupied by additional information while the remaining bytes are occupied by the message portions (segments). Of course, the user receiving the cells shall perform the reverse operation (re-assembly) to obtain again the message starting from ATM payloads.

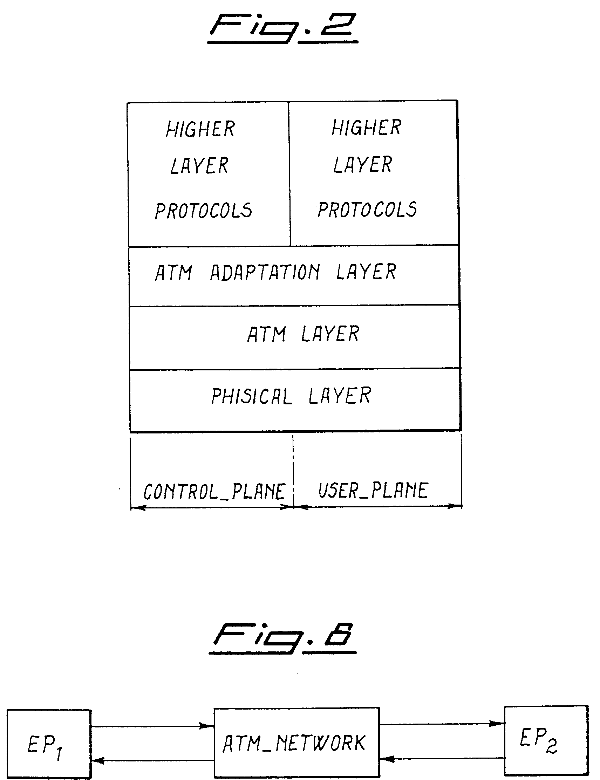

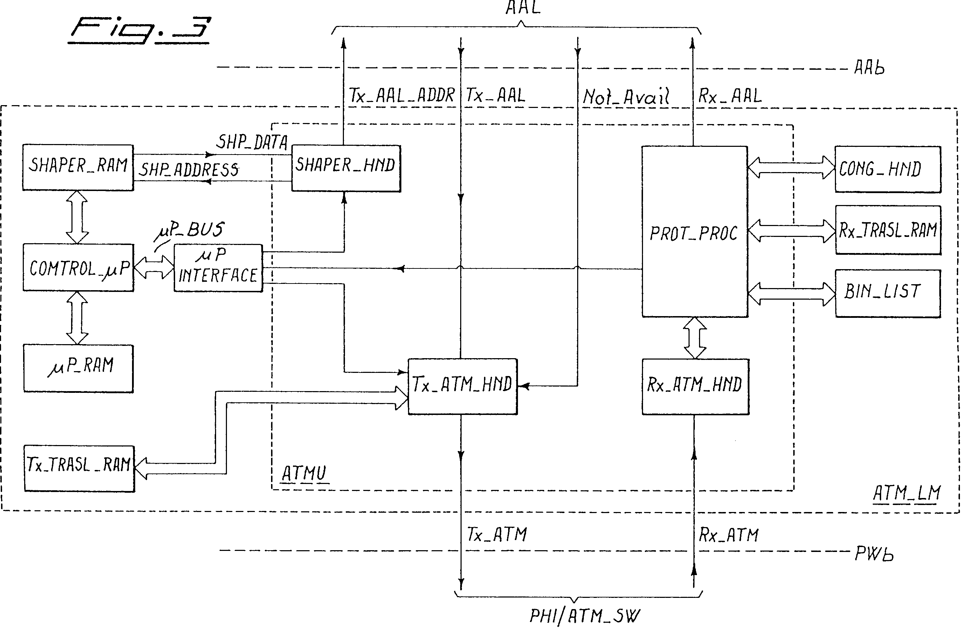

Conversion of the user information into ATM cells to be sent to the line is made through an ordered succession or stack of different layer protocols, shown in summary in Fig. 2 where rectangles represent the complex of operations made on data. Transfer of data involves the execution of protocols of different hierarchical level from top to bottom; in the reception phase protocols are made from bottom to top.

The invention more particularly relates to the so-called ATM layer which, as shown in the attached Fig. 2, is placed between the Physical Layer (PHI) and the adaptation layer (ATM Adaptation Layer) AAL. A hardware implementation of this last (AAL 3/4) formed the subject of a previous patent application in the name of the same applicant, deposited on 18.12.1992 under No. MI92A 002880.

It is well known that for ATM systems a negotiation is foreseen between the network managing company and the user concerning the bit rate this one can transmit. Consequently, data transmission shall be "governed" at all points of an information flow generation, typically user's stations (workstations, access multiplexers), and at all traffic "formation" points (service server - connectionless server, signalling processors).

In presence of applications where traffic characteristics are unpredictably variable or they cannot be summarised in analytical models ("non regulated" applications), control and formation of the transmitted information flow shall take place at ATM layer.

This control consists in shaping data transmission according to some parameters agreed upon the user and the network managing company.

For instance, these parameters can be the peak cell rate, the average transmission speed during a time T, etc.

This shaping operation shall also consider the possibility that "congestion" phenomena occur. These phenomena are represented by the temporary impossibility, by the ATM network, to transmit data between two or more users at a bit rate equal to the bit rate agreed with the user.

### Background Art

The shaping operation can be performed through a high number of "clocks" to be associated to users' classes to regulate the emission of cells relevant to each one of them in a way complying with the negotiated traffic parameters.

However, such a solution is not flexible for possible future variations of transmission parameters and/or number of users and connections insisting on the same ATM component. In particular this solution makes the dynamic variation of the connection band descriptor parameters very complex.

Also, this solution cannot be implemented on a sole chip, and this involves considerable cost and assembly problems in the phase of large scale production.

### Object of the Invention

One object of this invention is to realise a hardware implementation of protocol functions of the ATM layer capable to overcome inconveniences and limits described above, having a limited cost and at the same time to be used both in Customer Premises Equipment, and in multiplexers and servers presents in switching nodes (signalling or service server) and both in the so-called connectionless environment and in the connection oriented environment.

An additional object of this invention is to realise a hardware implementation of the ATM layer capable to interface both with the physical ATM layer treating cells in standard format (53 bytes), and directly with the switching node, treating cells in proprietary format (e.g., 64 bytes).

Particular object of this invention is to realise a hardware implementation of the ATM layer allowing to simply and effectively manage the occurrence of "congestion" phenomena in the ATM network.

The invention consists of a device for the conversion into ATM cells of information segments coming from an higher adaptation layer and accompanied by connection and identification parameters, as well as for the reverse conversion from ATM cells including channel and path identifications into information segments including connection and application identification parameters. The device is characterised by the fact that it includes a traffic forming or shaping unit controlling the succession of transmissions of ATM cells towards an ATM network according to parameters contained in a memory unit, being said parameters relevant to traffic profiles of each connection; said parameters being updated by a microprocessor as the number and characteristics of said connections vary.

Favourably, each location of said memory unit includes a parameter associating in an univocal manner an ATM connection to a connection and application identification of said higher adaptation layer and said device includes:
- means for the generation of a scanning address of said memory unit;
- means for the transmission toward said higher adaptation layer of a request for sending an information segment corresponding to the parameter contained in the location of said memory unit addressed by said scanning address;
- means for the conversion of said information segment into an ATM cell with channel and path identifications corresponding to said connection and application identifiers of said information segment; and
- means for transfer of said ATM cell obtained from said information segment towards said ATM network.

Usefully said device includes:
- means for reception of an ATM cell from said ATM network;
- means for conversion of said ATM cell into an information segment including connection and application identification parameters; and
- means for the transmission of said information segment towards said higher adaptation layer.

Further advantageous characteristics form the subject of the appended claims.

Such a device founds its application in different points of the B_ISDN network: in node (ConnectionLess or Signalling servers, in access multiplexers or in Customer Premises Equipment. It allows to implement the ATM protocol layer, both during reception and transmission and to control traffic formation both at Virtual Channel (VC) and Virtual Path (VP) levels.

Fig. 1 partly already described shows application points of the device according to the present invention, indicated with ATM_LM in the B_ISDN network.

The ATM_LM device performs the following operations:
- it receives/transmits from/to the physical layer (PHI) a flow of valid cells at ATM layer, in the 53 bytes format according to ITU-T standard (external format);
- it receives/transmits from/to the ATM_SW switching node a flow of valid ATM cells, of empty cells and of test cells in the 64 bytes length (internal format);
- it implements the traffic formation function for each ATM (VC or VP) connection on the basis of parameters declared by the user to the network managing company;
- it performs the translation of parameters at ATM layer (VC and VP) into parameters at AAL layer;
- it delivers/receives to/from the AAL protocol layer a flow of 48 bytes ATM Service Data Unit (ATM_SDU);
- it makes the diagnostics of a congestion condition;
- it sends/receives metasignalling cells coming from/addressed to the connection line. Metasignalling means a complex of procedures for assigning or dampening one or more signalling connections;
- it controls insertion of cells belonging to the so-called "Operation and Maintenance" (O&M channels).

One can appreciate that through such an architecture, the function of traffic profile formation and control of each connection is performed at ATM layer.

In this way it should be possible to dynamically vary the description of connections satisfying to new user's requirements or meeting external situations (e.g. "congestion").

### Brief Description of the Drawings

Structural and functional characteristics and further advantages as for the performances of the device according to this invention could be better understood from the clarifying and not restrictive description given hereunder, together with the attached figures, where:
figure 1, already described, shows an ATM network;
figure 2, already described, shows the protocol reference model;
figure 3 is a diagram showing the hardware implementation according to the invention of the ATM layer;
figure 4 shows the interface structure between the adaptation layer AAL and the unit in Fig. 3;
figure 5 shows the time course of signals present on the AAb interface of unit in Fig. 3;
figure 6 shows the interface structure between the physical layer and the ATM_SW switching network with the unit in Fig. 3;
figure 7 is a diagram showing more in detail the structure of traffic formation blocks of the unit in Fig. 3;
figure 8 shows the structure of the units in an ATM network involved in a possible congestion phenomenon;
figure 9 shows the structure of congestion blocks in case of reception, by the unit in Fig. 3, of a congestion signal according to the diagram in figure 8;
figure 10 shows the structure of congestion blocks of the congestion phenomenon in case of transmission, by the unit in Fig. 3, of a congestion signal according to the diagram in figure 8;
figure 11 shows the structure of blocks of the unit in figure 3 performing the direct determination of the congestion condition;
figure 12 shows the block structure of the unit in figure 3 performing the indirect determination of the congestion condition;

### Detailed Description of the Preferred Embodiment of the Invention

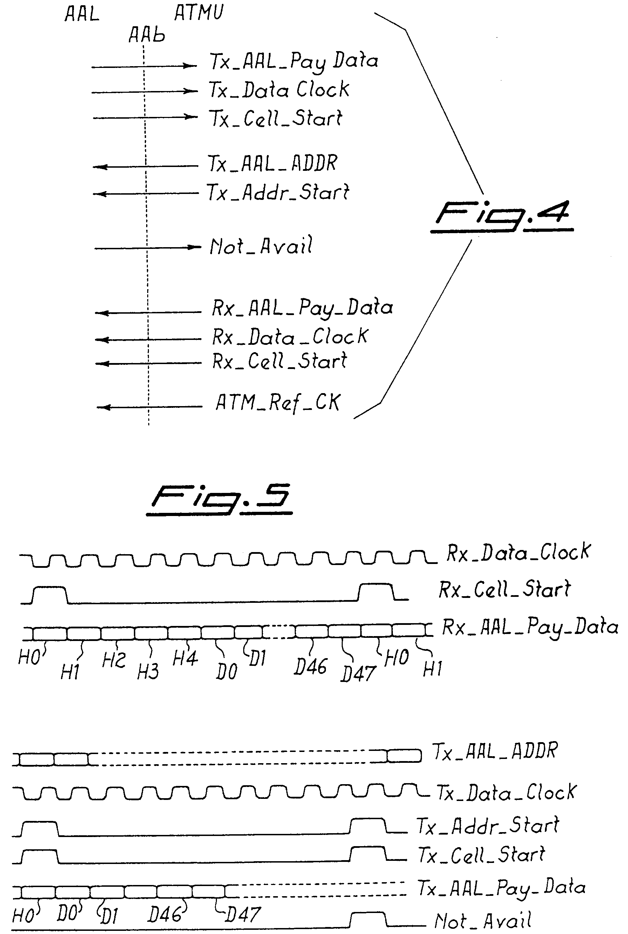

Making reference to the attached Fig. 3, a hardware implementation of the ATM protocol layer according to the present invention (in figure 1 indicated with ATMu and ATMd) has been indicated as a whole with an ATM-LM block (ATM Layer Model).

Through an AAb interface, the AM_LM block exchanged data Tx_AAL, Rx_AAL, Tx_AAL_ADDR and Not_Avail with the AAL adaptation layer.

Through a PWb interface the ATM_LM block exchanges data Tx_ATM and Rx_ATM with the ATM layer.

This ATM layer can consist of a switching node (ATM_SW) or of the physical layer (PHI) of the ATM network.

The ATM_LM block including a traffic forming or shaping block, called ATMU, connected to a control microprocessor CONTROL_µP, fit with its own memory unit µP_RAM.

The ATMU block is connected to the microprocessor CONTROL_µP through a µP_BUS and a microprocessor interface µP_INTERFACE.

The main function of the ATMU block is to form or shape the traffic of each connection.

The traffic shaping block ATMU is also connected to a congestion controller CONG_HND and to a memory unit SHAPER_RAM, Tx_TRASL_RAM, Rx_TRASL_RAM and BIN_LIST.

The ATMU block includes also an ATM protocol controller in reception Rx_ATM_HBD, a protocol processor PROT_PROC, an ATM protocol controller in transmission Tx_ATM_HND and a control unit SHAPER_HND for the SHAPER_RAM memory.

Always referring to the attached Fig. 3, main functionality of the ATM_LM block in transmission shall be shown.

The SHAPER_HND control unit generates a scanning address SHP_ADDRESS for the memory unit SHAPER_RAM.

The SHAPER_RAM memory unit supplies the SHAPER_HND unit with SHP_DATA parameters univocally indicating a connection and an application of the AAL adaptation layer.

The SHAPER_HND unit sends a transmission request of an information segment SAR_PDU (SAR Protocol Data unit) corresponding to the connection and to the application indicated by SHP_DATA toward the AAL adaptation layer on the Tx_AAL_ADDR bus.

For a detailed description of the structure of these information segments SAR_PDU refer to the already mentioned Italian patent application in the name of the Applicant.

The SAR_PDU segment includes a payload AAL_PDU (AAL Protocol Data Unit), corresponding to the 48 payload bytes of an ATM cell, and UTUI (User To User Information) and Prio (Priority) parameters.

Following this request on the Tx_AAL_ADDR bus, the AAL layer answers by sending a SAR_PDU segment on the Tx_AAL bus, or sending a signal on the Not_Avail bus.

This signal on the Not_Avail bus indicates unavailability of the AAL layer to transfer an information segment.

In case of connection with the ATM Physical layer (PHI), through information contained in the Tx_TRASL_RAM memory, the transmission ATM protocol controller Tx_ATM_HND converts this segment SAR_PDU in an ATM cell containing in its header the required virtual path VPI and virtual channel VCI information.

On the contrary, in case of connection with the ATM_SW switching node, the Tx_ATM_HND controller converts this segment SAR_PDU into a cell addressed by a parameter OCI (Output Compressed Identifier).

In both the cases, VPI, VCI and OCI information is obtained on the basis of connection and application indications ID_AAL.ID_SSCS on 12 bits contained in SHP_DATA parameters.

The ID_AAL portion of the address ID_AAL.ID_SSCS identifies the connection at AAL layer, while the ID_SSCS portion (Specific Service Convergence Sublayer) is the AAL protocol portion tied to the application.

The ID_AAL.ID_SSCS address thus identifies the connection and application of the AAL layer enabled to transmit an information segment (ATM Service Data Unit) at a generic moment.

Finally, the Tx_ATM_HND controller sends the so obtained ATM cell, to the Tx_ATM bus of the PWb interface.

Always referring to the attached Fig. 3, main functionality of the ATM_LM block during reception shall be described.

In case of connection with the physical layer PHI, the ATM reception protocol controller Rx_ATM_HND analyses ATM cells reaching the Rx_ATM bus of the PWb interface and obtains from the header VPI and VCI address information.

This information is used by the protocol processor PROT_PROC to address the memory BIN_LIST (transcoding memory) which gives back a 12 bits ACI identifier (AAL Compressed Identifier).

This ACI identifier is used to address the Rx_TRASL_RAM memory containing ID_AAL.ID_SSCS addresses.

This ID_AAL.ID_SSCS address is sent to the AAL layer together with the ATM_SDU segment, representing the ATM cell payload, to UTUI and Prio information and to a CE parameter (Congestion Experienced) relevant to a congestion condition.

This CE parameter is calculated by the ATM_LM unit itself.

In case of connection with the ATM_SW switching node, the reception ATM protocol controller Rx_ATM_HND analyses the ATM cells reaching the Rx_ATM bus of the PWb interface and directly obtains the OCI identifier from the header.

This OCI identifier is used to directly address the Rx_TRASL_RAM memory containing ID_AAL.ID_SSCS addresses.

The protocol processor PROT_PROC finally sends the ATM_SDU segment so obtained and the ID_AAL.ID_SSCS addressed to the Rx_AAL bus of the AAb interface.

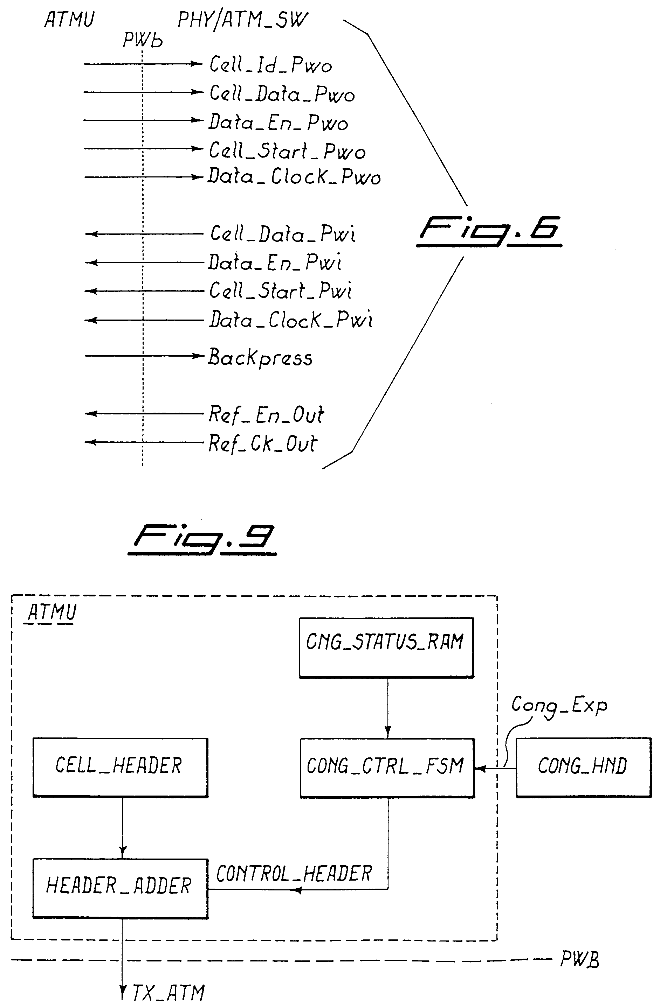

Figure 4 shows better in detail all signals crossing the AAb interface connecting the ATM_LM block to the AAL adaptation layer, which are:
- Tx_AAL_ADDR: 8-bit bus on which ID_AAL.ID_SSCS identifiers transit;
- Tx_Addr_Start: 1-bit bus on which the transmission start signal of ID_AAL.ID_SSCS identifiers transit on bus Tx_AAL_ADDR;
- TX_AAL_Pay_Data: 8-bit bus on which the information load from the AAL adaptation layer transit toward the block ATM_LM. Observing the attached fig. 5 we can notice that the format of data transferred on the Tx_AAL_Pay_Data bus includes an H0 byte and 48 D0:D47 bytes. The H0 byte contains UTUI bits (User To User Indication) indicating the end of a message and Prio (Priority) bits indicating the priority of data transferred. The signal on the Tx_ADDR_Start bus is released every 53 clock cycles and therefore the time T dividing two subsequent cell transfers is equal to an ATM cell time;
- Not_Avail: 1-bit bus on which a signal indicating unavailability of the AAL layer to transmit an information segment SAR_PDU transits;
- Tx_Cell_Start: 1-bit bus on which a signal for transfer starting of a cell from the AAL adaptation layer to the ATM_LM block transits;
- Tx_Data_Clock: 1-bit bus on which transits the transmission clock;
- Rx_AAL_Pay_Data: 8-bit bus on which transits from the ATM_LM block to the AAL adaptation layer an information load represented by segments SAR_PDU, by ID_AAL.ID_SSCS addresses, by UTUI, Prio and CE bits.

Observing the attached fig. 5 we can notice that the format of data transferred to the Rx_AAL_Pay_Data bus includes 5 H0:H4 bytes and 48 DO:D47 bytes. The HO byte includes ID_AAL, which is an identification parameter of the device performing the AAL protocol. The H3 byte includes ID_SSCS, while the H4 byte includes bits UTUI, P and CE. The Ce parameter signals a congestion situation suffered during crossing of the ATM network by the connection the cell belongs to;
- Rx_Cell_Start: 1-bit bus on which a transfer start signal of a cell from the ATM_LM block to the AAL adaptation layer transits
   Rx_Data_Clock: 1-bit bus on which the reception clock signal transits. The Rx_Data_Clock is kept separate from the transmission Tx_Data_Clock and therefore the AAb interface can dialogue with reception and transmission devices at different speed rates;
- ATM_Ref_Ck:1-bit bus on which a reference clock signal coming from the ATM layer transits. The ATM_Ref_Ck is made available by the ATM_LM block to AAL devices which can in this way use it to obtain their operation clock.

Fig. 6 shows all signals crossing the PWb interface connecting the ATM_LM block with the physical layer PHI or with the switching network ATM_SW, which are:
- Cell_Id_Pwo: bus on which the ACI parameter (AAL Compressed Identifier) transits toward the ATM_SW network. This parameter is used for cells addressed to the ATM_SW switching network only;
- Cell_Data_Pwo: 8-bit bus on which the cell addressed to the ATM_SW switching network or to the physical layer, PHI transits;
- Data_En_Pwo: 1-bit bus on which a validation signal of the Cell_Data_Pwo signal transits;
- Cell_Start_Pwo: 1-bit bus on which a transfer start signal of a cell on the Cell_Data_Pwo transits;
- Data_Clock_Pwo: 1-bit bus on which the clock signal toward the ATM_SW switching network or toward the physical layer PHI transits;
- Cell_Data_Pwi: 8-bit bus on which the cell coming from the ATM_SW switching network or from the physical layer PHI transits;
- Data_En_Pwi: 1-bit bus on which a validation signal of the Cell_Data_Pwi transits;
- Cell_Start_Pwi: 1-bit bus on which a cell transfer start signal on the Cell_Data_Pwi transits;
- Data_Clock_Pwi: 1-bit bus on which the clock signal coming from the ATM_SW switching network or from the physical layer PHI transits;
- BackPress: 1-bit bus on which a signal transits toward the ATM_SW switching network to prevent data transmission toward the ATMU block. This signal is generated for instance when the ATMU block buffer is saturated and therefore transmission of additional data would cause cell losses;
- Ref_En_Out: 1-bit bus on which a validation signal coming from the physical layer PHI transits. This validation signal is used only when the physical layer which the PWb interface is connected to is of SDH type (Synchronous Digital Hierarchy);
- Ref_Ck_Out: 1-bit bus on which a clock signal coming from the ATM_SW network or from the physical layer PHI transits; the ATMU block can use this signal to obtain its own operation clock.

Referring to the attached Fig. 7 components of the ATM_LM block shall be shown more in detail (not shown with reference to fig. 3 for graphic reasons).

Each location of the SHAPER_RAM memory unit contains an address ID_AAL.ID_SSCS in compressed form. Whenever the cell shall not be transmitted, the corresponding location of the SHAPER_RAM memory contains a null pointer NULL_Pointer.

The SHAPER_RAM memory, cyclically scanned with a SHP_ADDRESS on 16 bits generated by the ATMU block, supplies the ATMU block itself with SHP_DATA on 13 bits contained in the SHAPER_RAM memory location corresponding to the present SHP_ADDRESS address.

One of the 13 bits of data SHP_DATA, indicated with F, selects the transmission mode through a multiplexer MUX_F.

Whenever the F bit has high logic value, the multiplexer MUX_F directly sends the remaining 12 bits of data SPH_DATA to a control block of the AAL interface indicated with AAL_INT_CNTRL, which sends them to the bus Tx_AAL_ADDR.

Whenever the F bit has a low logic value, the multiplexer MUX_F sends the values supplied by a second multiplexer MUX_DPR to the AAL_INT_CNTRL block.

The second multiplexer MUX_DPR is controlled by a logic value DPR contained in a location of the SHP_DPR_STATUS_RAM (Shaper Depress Status Ram) memory, addressed by data SPH_DATA.

When the DPR signal assumes a high logic value, the multiplexer MUX_DPR sends directly to its output the 12 bits ID_ALL.ID_SSCS of data SPH_DATA.

In a contrary instance, the multiplexer MUX_DPR sends a value Null_Pointer, indicating a non significant address.

Methods for compilation of data contained in the SHP_DPR_STATUS_RAM memory shall be described making reference to ATM_LM block components concerned in traffic congestion control.

The scanning value SPR_ADDRESS for the SHAPER_RAM memory shall be supplied by a counter SPH_COUNTER through a timing control unit TIMING_CTRL.

This scanning value varies from 0 to an LSB value determined by the CONTROL_µP microprocessor on the basis of open ATM connections.

The memory SHAPER_RAM consists of two separate memory units SRAM1 and SRAM2, one of which is scanned by the ATMU unit, while the other one is subjected to update operations of parameters concerning new connections.

At the end of the scanning cycle on one of these memory units, the subsequent scanning cycle restarts on the other memory unit, while the previous one is updated.

This change of context is controlled by the CONTROL_µP microprocessor through the CHANGE_SHPMEM signal on the basis of the value present on the USED_SHPMEM signal.

On the basis of the value present on the CHANGE_SHPMEM signal and of the current value SHP_COUNT present in the counter SHP_COUNTER, a combining network RC_SHPMEM supplies with signal SEL_MEM the TIMING_CTRL unit which enables the other memory unit to scanning. The combining network RC_SPHMEM supplies also the CONTROL_µP microprocessor with the updated USED_SHPMEM signal.

The value contained in the ROUNDTRIP register determines the count basis of counter SHP_COUNTER and, consequently, the scanning methods of the SHAPER_RAM memory.

The content of the ROUNTRIP register is updated, through the µ-INTERFACE microprocessor interface, by the CONTROL_µP microprocessor determining the relevant value on the basis of the number of open connections and their traffic characteristics.

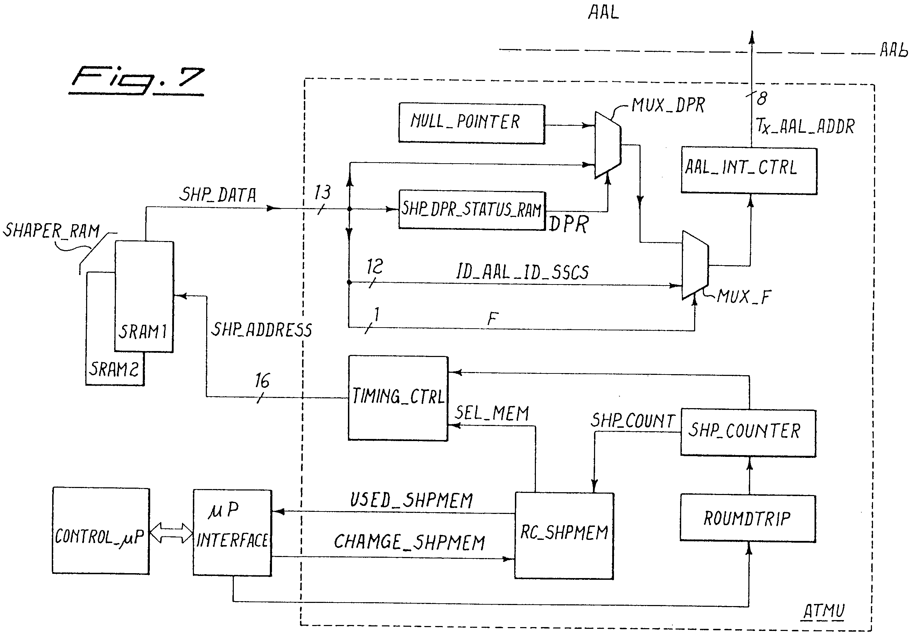

Fig. 8 shows two user stations, indicated with EP₁ and EP₂, respectively, which dialogue between them through an ATM network called ATM_NETWORK.

Whenever for instance, information transmitted by EP₁ to EP₂ transit through a node with overflow buffer, a "congestion" phenomenon could occur.

In this case cells belonging to the connection between EP₁ and EP₂ should be marked by the node as congestioned cells in order they can be recognised in this way by the EP₂ station.

The congestion signalling simply consists in setting the appropriate value of the PTI (Payload Type Indication) field of the cell header.

The ATM_LM block located in the EP₂ station, once these cells marked as "congestioned" cells are received, creates a notice message FERC (Far End Received Congestion) and sends it to the network ATM_NETWORK toward the EP1 station transmitting these cells.

The FERC message is an invitation made by the EP₂ station to the EP₁ station, to reduce the band of its connection, that is to reduce its data transfer speed.

Once the EP₁ station has reduced its data transfer speed, the EP₂ station stops to receive cells marked as "congestioned" cells and sends a message FETC (Far End Terminated Congestion) to station EP₁.

The FETC message allows the EP1 station to restart transmission with the transfer data speed agreed on the moment of connection set-up.

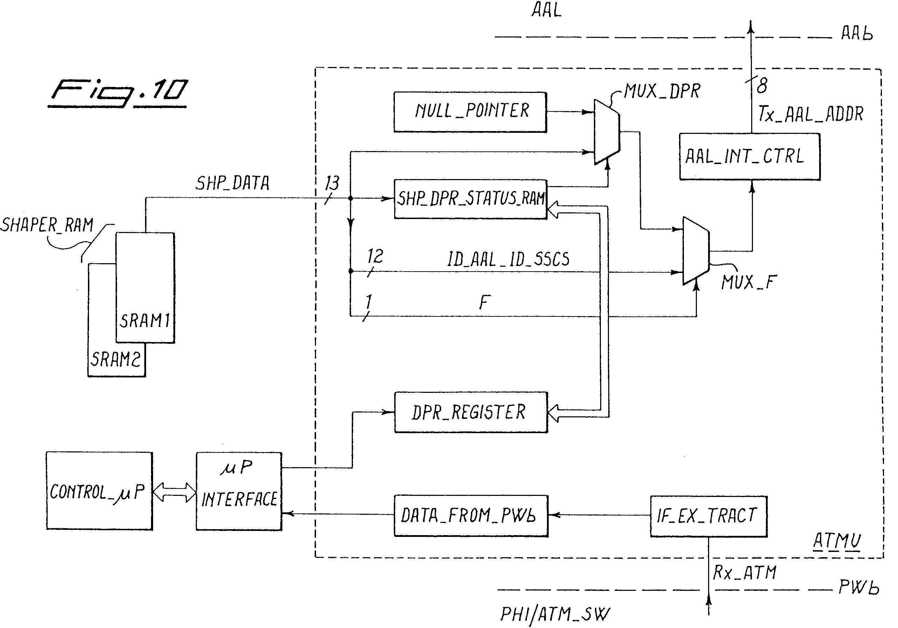

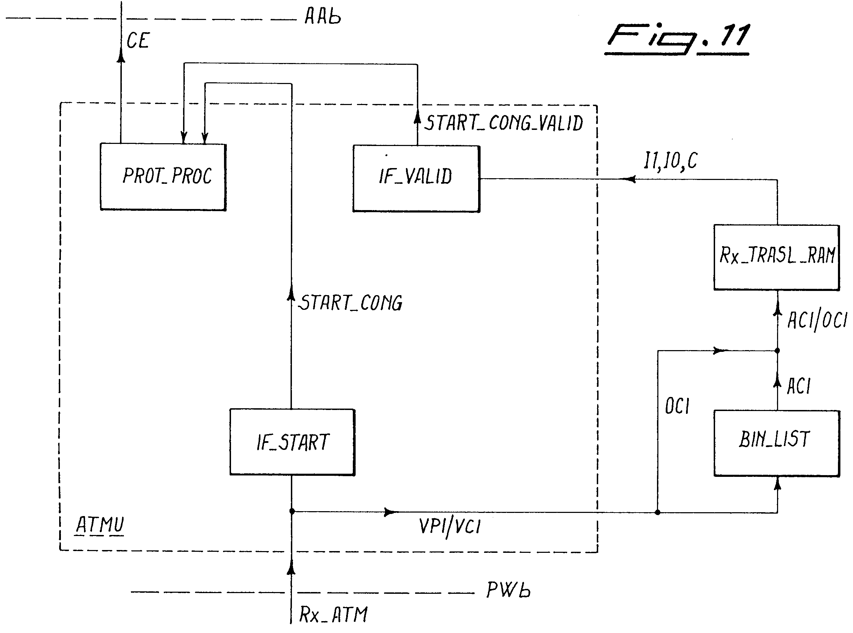

Making reference to the attached Figures 9 and 10 the components of the ATM_LM block concerned in the variation of data transmission speed following to reception of FERC and FETC messages shall be shown more in detail.

Referring to fig. 9, the ATMU block includes - in addition to the units previously described with reference to figures 3 and 7 - a CNG_STATUS_RAM memory, containing an indication on the congestion status of each connection.

A CELL_HEADER register contains the header of the present ATM cell.

When a congestion situation is detected, the CONG_HND block sends a Cong_Exp signal (Congestion Experienced) to the ATMU unit.

Following this Cong_Exp signal a block CNG_CTRL_FSM (Congestion Control Finite State Machine) sets the location of the memory unit CNG_STATUS_RAM corresponding to the connection on which the congestion was detected and sends a FERC_CTRL information through CONTROL_HEADER signal only when the corresponding location of the CNG_STATUS_RAM memory is not already set.

A cell shaping block HEADER_ADDER, following the FERC_CTRL signal, sends the FERC cell to the PWb interface creating the heading starting from VPI and VCI identifiers contained in the CELL_HEADER register.

Thanks to the presence of the CONG_STATUS_RAM memory which stores the congestion status of each connection, it is possible to send a sole FERC message answering to more congestion signals Cong_Exp relevant to the same connection.

Similarly, when CONG_HND detects the end of a congestion situation, a Not_Cong_Exp signal is sent to the ATMU unit.

Following this Not_Cong_Exp signal, the CNG_CTRL_FSM block sets the location of the CNG_STATUS_RAM memory unit location corresponding to the connection on which the end of congestion was detected and sends a FETC_CTRL signal on the CONTROL_HEADER wire.

The HEADER_CTRL block, following the FETC_CTRL signal, sends the FETC cell to the PWb interface creating once again the header starting from VPI and VCI identifiers contained in the CELL_HEADER register.

Referring to fig. 10, the ATMU unit which generates the congestioned traffic, receives the ATM cells, which are analysed by an IF_EX_TRACT block, on the PWb interface.

Whenever the IF_EX_TRACT block recognises an ATM cell as FERC cell, it sends the same to a FIFO DATA_FROM_PWb memory which makes it available on the µP_INTERFACE of the CONTROL_µP microprocessor.

On the basis of VPI and VCI identifiers values of the FERC cell, the CONTROL_µP microprocessor determines the corresponding ID_AAL.ID_SSCS address and writes it in the register DPR_REGISTER.

One bit of the ID_AAL.ID_SSCS address is relevant to the depressed band status of the relevant connection.

This bit is written in the SPH_DPR_STATUS_RAM memory unit containing a depressed band indication for each active connection.

This depressed band indication, indicates if the relevant connection shall transmit, following to a request to reduce the connection band, with a data transmission speed reduced compared to what agreed.

Methods for transmission of ATM cells reaching the PWb interface changes according to this value stored in the SPH_DPR_STATUS_RAM memory.

Cells belonging to connections not marked in the SPH_DPR_STATUS_RAM memory are certainly sent.

On the contrary, cells belonging to connections marked in the SPH_DPR_STATUS_RAM memory are sent only when the relevant F bit (Forced transmission) has value 1.

For each ID_AAL.ID_SSCS address stored in the SHAPER_RAM memory, the value of the relevant F bit is defined during the phase of SHAPER_RAM memory compilation on the moment a new connection is included.

Criteria for F bits setting in the SHAPER_RAM memory can be represented, for instance, by the peak fractional reduction, in the average reduction on a T time, in the average reduction on a pre-set cell number, etc..

For instance the peak of a connection can be reduced dividing it by figures integer power of two, which corresponds to assigning value 1 to the F bit of the SHAPER_RAM memory to one cell every two, one cell every four, one cell every eight, etc..

Whenever the IF_EX_TRACT block recognises an ATM cell as FETC cell, it sends it to the FIFO DATA_FROM_PWb memory which makes it available on interface µP_INTERFACE of the control microprocessor CONTROL_µP,

On the basis of the value of VPI and VCI identifiers of the FETC cells the CONTROL_µP microprocessor determines the corresponding address IS_AAL.ID_SSCS and eliminates the relevant bit of the depressed band of the relevant connection in the register DPR_REGISTER.

This bit is written in the SHP_DPR_STATUS_RAM memory and the depressed band indication relevant to that connection is eliminated.

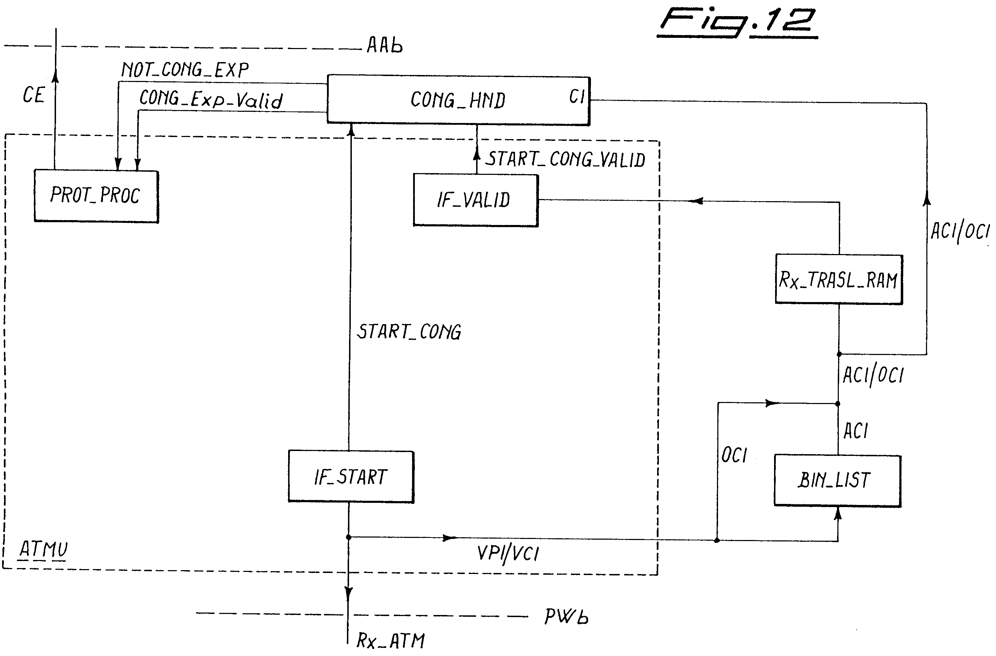

Referring to the attached figures 11 and 12, components of the ATM_LM block concerned in emission of signals relevant to the possibility to detect a congestion status and to the end of a congestion status shall be described more in detail.

Detection of a congestion status can take place in two separate ways, a "direct" mode, shown in the diagram of Fig. 11, and an "indirect" mode", shown in the diagram of Fig. 12.

The congestion status is directly detected when the congestion indication is generated at reception of the first cell experimenting the congestion on the PWb interface, while it is indirectly detected when the signal Cong_Exp is the result of an algorithmic processing made by the CONG_HND block.

Each location of the Rx_TRASL_RAM memory includes a bit C (Congestion), indicating the ATM connection as subject to congestion control, and two bits I1.I0 identifying the different categories of ATM cells, e.g. empty cell, cell to reject, cell to send to control microprocessor CONTROL_µP, O&M cell (Operation and Maintenance), test cell, metasignalling cell, information cell belonging to a virtual channel (VC), information cell belonging to a virtual path (VP), etc.

In case of connection with the connection network ATM_SW the memory Rx_TRASL_RAM is directly addressed by the OCI parameter contained in VPI and VCI identifiers of the ATM cell.

In case of connection with the physical layer PHI the Rx_TRASL_RAM memory is addressed by the ACI parameter contained in the BIN_LIST memory addressed in its turn by VPI and VCI parameters of the ATM cell.

The ATMU block analyses the cell arriving at the PWb interface and checks in the IF_START block if the cell suffered or not the congestion status in the network. This check is made by the IF_START block through a check on the value of the PTI range of the ATM cell header.

If the PTI value corresponds to a congestion condition of the cell, the IF_START block emits the START_CONG signal.

In this case an IF_VALID block examines the value of the two bits I1.I0 contained in the Rx_TRASL_RAM memory location referred to the cell received and whenever values of these bits I1.I0 are not to be rejected the cell and the bit C has a high logic value, the IF_VALID block emits a START_CONG_VALID signal.

Referring to Fig. 11, in case of detection of congestion is made in the "direct" mode, signals START_CONG and START_CONG_VALID are directly taken to a protocol control block PROT_PROC emitting the CE bit on the AAb interface.

Referring to Fig. 12, if the congestion is "indirectly" detected and bits I1.I0 configuration is such to not reject the cell and the bit C has high logic value, the ACI/OCI parameter is transferred to the CONG_HND device as CI parameter (Compressed Identifier).

If the analysis of the ATM connection under examination is translated, according to the algorithm implemented in the CONG_HND block, when determining a congestion status, this indication is sent by the CONG_HND block to the ATMU block on NOT_CONG_EXP signal together with a validation signal CONG_Exp_Valid.

In this case the protocol control block PROT_PROC emits the CE bit on the AAb interface.

Finally a similar architecture allows to modify the speed of data transmission in a dynamic way.

One could appreciate that this can be obtained simply compiling in an appropriate way the SHAPER_RAM memory.

This compilation is made according to data contained in FERC and FETC signalling cells indicating the network congestion status.

Also, one can appreciate the fact that, through such an architecture, it is possible to modify the speed of data transmission in a dynamic way for reasons different from the network congestion status.

In this case it shall be enough that a station sends an appropriate signalling cell BR (Bandwidth Request) relevant to a request of higher speed in data transfer to the network.

From the access node, to which the user is directly connected, the request proceeds toward all nodes concerned in the connection. If all the nodes accept this request, the access node sends an appropriate signalling cell BA (Bandwidth Acknowledge) to the user, indicating adaptation of the network to transmission parameters indicated by the BR cell.

The user, simply recompiling the SHAPER_RAM memory with new values, can transmit according to the new traffic profile.

Obviously what described is given as a non restrictive example. Variants and modification are possible, without exceeding the protection field of the following claims.

## Claims

**1.** Device for the conversion into ATM cells of information segments (SAR_PDU) coming from an higher adaptation layer (AAL) and accompanied by connection and application identification parameters (ID_AAL.ID_SSCS), as well as for the reverse conversion, from ATM cells including channel (VCI) and path (VPI) identifications, into information segments including connection and application identification parameters (ID_AAL.ID_SSCS);
characterised by the fact that said device (ATM_LM) includes a traffic forming or shaping unit (ATMU) controlling the sequence of ATM cells transmission to the ATM network according to parameters contained in a memory unit (SHAPER_RAM), being these parameters relevant to traffic profiles of each connection, and updated by a microprocessor (CONTROL_µP) as number and characteristics of said connections vary.

**2.** Device according to claim 1, characterised by the fact that each location of said memory unit (SHAPER_RAM) includes a (SHP_DATA) parameter associating in an univocal manner an ATM connection to a connection and application identifier (ID_AAL.ID_SSCS) of said higher adaptation layer (AAL), and by the fact to include:
- means (SHP_COUNTER, ROUND_TRIP, TIMING_CTRL) for the generation of a scanning address (SHP_ADDRESS) of said memory unit (SHAPER_RAM);
- means (AAL_INT_CTRL, Tx_AAL_ADDR) for the transmission toward said higher adaptation layer (AAL) of a request for sending an information segment (SAR_PDU) corresponding to the parameter (SHP_DATA) contained in the location of said memory unit (SHAPER_RAM) addressed by said scanning address (SHP_ADDRESS);
- means (Tx_TRASL_RAM) for the conversion of said information segment into an ATM cell with channel (VCI) and path (VPI) identifications corresponding to said connection and application identifiers of said information segment (SAR_PDU); and
- means (Tx-ATM_HND, Tx_ATM) for transfer of said ATM cell obtained from said information segment (SAR_PDU) toward said ATM network (PHI/ATM_SW).

**3.** Device according to claim 2, characterised by the fact that said address (SHP_ADDRESS) for the scanning of said memory unit (SHAPER_RAM) consists of an integer number generated by a cyclic counter (SHP_COUNTER).

**4.** Device according to claim 3, characterised by the fact that integer numbers generated by said cyclic counter (SHP_COUNTER) are included between zero and a maximum value (LSB) determined by a microprocessor (CONTROL_µP) according to the number of open ATM connections.

**5.** Device according to claim 4, characterised by the fact that said cyclic counter (SHP_COUNTER) is a counter with a variable base count and that the value of the count base is contained in a register (ROUNDTRIP) which content is determined by a microprocessor (CONTROL_µP) according to the present traffic characteristics.

**6.** Device according to claim 1, characterised by the fact that said memory unit (SHAPER_RAM) includes two separate benches (SRAM1, SRAM2), respectively forming the memory in use and the updating memory, which alternate in operation.

**8.** Device according to claim 1, characterised by the fact to include:
- means (Rx-ATM_HND) for reception of an ATM cell from said ATM network;
- means (PROT_PROC, Rx_TRASL_RAM, BIN LIST) for the conversion of said ATM cell into an information segment (SAR_PDU) including connection and application identifier parameters (ID_AAL.ID_SSCS); and
- means (PROT_PROC) for the transmission of said information segment toward said higher adaptation layer (AAL).

**9.** Device according to claim 1, characterised by the fact to include an interface (PWb) toward said ATM network allowing the connection of said device with an ATM switching node (ATM_SW) and to include means for the conversion of said information segments (SAR_PDU) into ATM cells in the proprietary format of said switching node (ATM_SW), as well as for the reverse conversion, from ATM cells in the proprietary format of said switching node (ATM_SW) into information segments (SAR_PDU) including connection and application identifier parameters (ID_AAL.ID_SSCS).

**10.** Device according to claim 1, characterised by the fact to include an interface (PWb) toward said ATM network allowing the connection of said device with the ATM physical layer (PHI) and to include means for the conversion of said information segments (SAR_PDU) into ATM standard format cells, as well as for the reverse conversion, from ATM standard format cells into information segments (SAR_PDU) including connection and application identifier parameters (ID_AAL.ID_SSCS).

**11.** Device according to claim 1, characterised by the fact to include an interface (PWb) toward said ATM network allowing the connection of said device both with an ATM switching node (ATM_SW) and with the ATM physical layer, and to include means for the conversion of said information segments (SAR_PDU) into ATM cells in the proprietary format of said switching node (ATM_SW), as well as for the reverse conversion, from ATM cells in the proprietary format of said switching node (ATM_SW) into information segments (SAR_PDU) including connection and application identifier parameters (ID_AAL.ID_SSCS), and means for the conversion of said information segments (SAR_PDU) into ATM standard format cells, as well as for the reverse conversion, from ATM standard format cells into information segments (SAR_PDU) including connection and application identifier parameters (ID_AAL.ID_SSCS).

**12.** Device according to claim 1, characterised by the fact to include an interface (AAb) toward said higher adaptation layer (AAL) including the following connections:
- an 8-bit bus (Tx_AAL_ADDR) on which said connection and application identifiers (ID_AAL.ID_SSCS) transit;
- a 1-bit bus (Tx_Addr_Start) on which a transmission start signal of said connection and application (ID_AAL.ID_SSCS) identifiers transit;
- an 8-bit bus (TX_AAL_Pay_Data) on which the information load from said adaptation layer (AAL) transit;
- a 1-bit bus (Not_Avail) on which a signal indicating unavailability of said adaptation layer (AAL) to transmit an information segment (SAR_PDU) transits;
- a 1-bit bus (Tx_Cell_Start) on which a signal for transfer starting of a cell from said adaptation layer (AAL) transits;
- a 1-bit bus (Tx_Data_Clock) on which transits a clock signal in transmission;
- an 8-bit bus (Rx_AAL_Pay_Data) on which an information load represented by information segments (SAR_PDU), connection and application identifiers (ID_AAL.ID_SSCS) transits from said device (ATM_LM) toward said adaptation layer (AAL);
- a 1-bit bus (Rx_Cell_Start) on which a transfer start signal of a cell from said device (ATM_LM) transits toward said adaptation layer (AAL);
a 1-bit bus (Rx_Data_Clock) on which a reception clock signal transits;
- a 1-bit bus (ATM_Ref_Ck) on which a reference clock signal coming from said ATM layer transits toward said adaptation layer (AAL).

**13.** Device according to claim 1, characterised by the fact to include an interface (PWb) toward the ATM network (ATM_SW/PHI) including the following connections:
- a 2-bit bus (Cell_Id_Pwo)on which a compressed identifier parameter (ACI) transits toward a switching node (ATM_SW) of the ATM network.
- an 8-bit bus (Cell_Data_Pwo) on which an ATM cell addressed to the ATM network (ATM_SW/PHI) transits;
- a 1-bit bus (Data_En_Pwo) on which a validation signal for said ATM cell addressed to the ATM network transits;
- a 1-bit bus (Cell_Start_Pwo) on which a transfer start signal of an ATM cell addressed to the ATM network (ATM_SW/PHI) transits;
- a 1-bit bus (Data_Clock_Pwo) on which a clock signal transits toward the ATM network (ATM_SW/PHI);
- an 8-bit bus (Cell_Data_Pwi) on which an ATM cell coming from the ATM network (ATM_SW/PBI) transits;
- a 1-bit bus (Data_En_Pwi) on which a validation signal for said ATM cell coming from the ATM network (ATM_SW/PHI) transits;
- a 1-bit bus (Cell_Start_Pwi) on which an ATM cell transfer start signal coming from the ATM network (ATM_SW/PHI) transits;
- a 1-bit bus (Data_Clock_Pwi) on which a clock signal coming from the ATM network (ATM_SW/PHI) transits;
- a 1-bit bus (Ref_Ck_Out) on which a clock signal coming from the ATM network (ATM_SW/PHI), or from the physical layer (PHI) transits to allow the device to obtain its own clock signal.

**14.** Device according to claim 13, characterised by the fact that said interface (PWb) toward the ATM network is connected to an ATM physical layer of the SDH type (Synchronous Digital Hierarchy) and that said interface (PWb) also includes a connection consisting of 1 bit (Ref_En_Out) on which a validation signal coming from said physical layer of the SDH type transits.

**15.** Device according to claim 1, characterised by the fact to include:
- means (IF_VALID, IF_START, CONG_HND) for the acknowledgement of a traffic congestion situation in a connection of an ATM network (ATM_NETWORK) according to reception of ATM cells marked as belonging to said congestioned connection;
- means (CNG_CTRL_FSM, CNG_STATUS_RAM, HEADER_ADDER) for the transmission toward said ATM network (ATM_NETWORK) of a notification ATM cell (FERC) indicating that acknowledgement of a traffic congestion situation occurred;
- means (IF_EX_TRACT) to acknowledge the occurred reception of said ATM notification cell (FERC) of traffic congestion situation;
- means (SHP_DPR_STATUS_RAM, MUX_F, MUX_DPR) to send toward said higher adaptation layer (AAL) of a signal (CE) of traffic congestion situation and of a request (CE, ID_AAL.ID_SSCS) to reduce the transmission speed for connections and applications of said higher adaptation layer (AAL) involved in said congestion situation;
- means (CNG_CTRL_FSM, CNG_STATUS_RAM, HEADER-ADDER) for the transmission toward said ATM network (ATM_NETOWRK) of a notification ATM cell (FETC) indicating the end of a traffic congestion situation was acknowledged;
- means (IF_EX_TRACT) to acknowledge the occurred reception of said ATM notification cell (FETC) of traffic congestion situation end;
- means (SHP_DPR_STATUS_RAM, AAL_INT_CTRL) to send toward said higher adaptation layer (AAL) a signal (CE) of end of traffic congestion situation and of a request (CE, ID_AAL.ID_SSCS) to restore the normal transmission speed for connections and applications of said higher adaptation layer (AAL) involved in said congestion situation.

**16.** Device according to claim 15, characterised by the fact that said means for sending toward higher adaptation layer (AAL) of said signal (CE) of congestion status include means (MUX_F, MUX_DPR) to inhibit or force the sending of said (CE) signal according to parameters (F) contained in said memory unit (SHAPER_RAM).

**17.** Device according to claim 1, characterised by the fact to include means (SHP_DPR_STATUS_RAM) for storing (SHP_DPR_STATUS_RAM) and updating (IF_EXTRACT, DATA_FROM_PWb, DPR_REGISTER) of parameters identifying connections, among said connections of said higher adaptation layer (AAL), which are in a reduced data transfer speed condition defined on moment of connection setting compared to the data transfer speed condition defined on moment of connection setting.

**18.** Device according to claim 17, characterised by the fact that said forming or shaping block (ATMU) controls the succession of transmissions of ATM cells toward said ATM network according to said parameters identifying connections being in a reduced data transfer speed status.
